# FASCICULE DE BREVET EUROPEEN

(11) **EP 1 870 196 B1**
(45) Date de publication et mention de la délivrance du brevet: **29.07.2009**
(21) Numéro de dépôt: 07110155.4
(22) Date de dépôt: 13.06.2007
(51) Int. Cl.: B23P 15/00, F16C 7/02

(54) **Procédé de fabrication d' un arbre de bielle mécanique**
Verfahren zur Herstellung eines Mittelrohres eines mechanischen Verbindungsarmes
Method of manufacturing a shaft of a mechanical connecting arm

(30) Priorité: 20.06.2006 FR 0605488
(43) Date de publication de la demande: 26.12.2007
(73) Titulaire: ROXEL France, 33167 Saint Medard en Jalles (FR)
(72) Inventeur: GRELIER, Alain, 45510, TIGY (FR); GOURSIN, Luc, 45072, ORLEANS (FR); AUDRI, Daniel, 41600, LAMOTTE BEUVRON (FR)
(74) Mandataire: Lucas, Laurent Jacques

(56) Documents cités:
- EP-A1- 0 839 593
- US-A- 2 863 341
- US-B1- 6 325 567

## Description

### DOMAINE DE L'INVENTION

L'invention concerne un procédé pour réaliser un corps de bielle creux suivant le préambule de la revendication 1. Un tel procédé est décrit dans le document US-B-6 325 567.

La présente invention se rapporte au domaine général de la fabrication des bielles mécaniques. Plus particulièrement elle se rapporte à la réalisation de bielle dont la partie centrale, ou corps de bielle, est constituée, pour des raisons de poids, par une structure tubulaire creuse. Par bielle, on entend ici tout élément susceptible de transmettre des efforts de traction et /ou compression par l'intermédiaire de ce tube au sein d'une structure, et présentant des caractéristiques dynamiques définies. L'invention concerne en particulier un procédé pour réaliser la partie centrale tubulaire d'une bielle et notamment d'une bielle d'attache de moteur pour aéronef.

### CONTEXTE DE L'INVENTION - ART ANTERIEUR

Dans certaines applications particulières, notamment dans le cas de systèmes mécaniques comportant des bielles et en particulier des bielles de fixation, les contraintes de poids peuvent avoir une influence prépondérante sur la façon dont sont réalisées certaines pièce de ces systèmes. C'est en particulier le cas dans le domaine de l'aéronautique où tout gain de poids est important car il se traduit immédiatement soit en terme économique sous la forme d'une plus grande autonomie. Certaines pièces mécaniques entrant dans la composition de ces systèmes ont à subir et à transmettre des contraintes mécaniques fortes. C'est en particulier le cas des bielles de fixation qui entre dans la composition du système mécanique qui assure la fixation d'un moteur sur un aéronef, sur une aile par exemple, bielles qui contribuent en particulier à transmettre la poussée du moteur à l'aile et qui à ce titre subissent des contraintes importantes. Ces bielles qui doivent être dimensionnées de façon à résister à ces contraintes sont par ailleurs des pièces mécaniques d'une longueur non négligeable pouvant par exemple atteindre 2 à 3 mètres.
Pour alléger de telles pièces, principalement constituées d'un corps sur lequel sont assemblés deux embouts ou têtes, on est conduit à envisager d'utiliser un corps de bielle creux.

Pour réaliser un corps de bielle creux, ou plus généralement un tube, une méthode connue consiste à usiner par des techniques connues d'usinage, telles que le forage par exemple, un canal cylindrique dans une barre de matériau de métal par exemple. Selon cette méthode, l'évidemment du corps de la bielle est réalisée par enlèvement de copeaux à partir d'une barre pleine, barre dont la taille correspond sensiblement à la taille du corps de bielle à réaliser. La bielle est ensuite achevée par assemblage des embouts sur l'extrémité libre du corps ainsi évidé. Cet assemblage peut être réalisé par différents procédés mécaniques connus, par soudage par exemple. Cette méthode connue présente deux inconvénients importants. D'une part c'est une méthode coûteuse, car la majeure partie de la barre de matériau initiale est réduite en copeaux lors de l'opération d'usinage, copeaux impropres en l'état à une quelconque utilisation et qui doivent être refondus sous forme d'une nouvelle barre si l'on souhaite employer la matière extraite de la barre initiale. D'autre part, une telle méthode n'est utilisable que si la longueur de la barre à usiner reste assez faible, typiquement inférieur à 700 ou 800 mm. Pour des longueurs plus importantes, cette méthode n'est plus envisageable.

Pour réaliser un corps creux à plus faible coût, il existe une autre méthode connue, qui consiste réaliser un tube à partir d'une tôle roulée et soudée longitudinalement, la longueur de la tôle étant sensiblement égale à la longueur du corps de bielle à réaliser. La bielle est alors complétée en assemblant les embouts sur le tube ainsi formé. Le corps de bielle ainsi réalisé a alors la forme d'un tube dont la paroi a une épaisseur e constante. Cette deuxième méthode permet avantageusement de réaliser de manière économique un corps de bielle creux de grande longueur, dont la paroi a l'épaisseur souhaitée. En revanche, l'épaisseur de la paroi du tube ainsi formé est nécessairement constante par principe, ce qui implique de réaliser un tube dont l'épaisseur est apte à résister aux contraintes locales les plus fortes à savoir, dans le cas d'un corps de bielle, les zones d'assemblage des têtes de bielle, situées aux extrémités du tube. On utilise ainsi une épaisseur de paroi, e, accrue sur toute la longueur du corps de bielle alors que cette épaisseur n'est réellement utile qu'au niveau des zones d'assemblage des têtes. Cette limitation a pour conséquence qu'il n'est pas possible par cette méthode d'optimiser la masse de la bielle formée. Dans le cas particulier de bielles de grande longueur entrant dans la composition d'un système mécanique global de fixation, cette limitation peut être réellement dimensionnante dans l'étude des moyens permettant d'alléger un tel système, tout en lui conservant ses caractéristiques mécaniques essentielles.

### PRESENTATION DE L'INVENTION

Un but de l'invention consiste à apporter une solution simple aux problèmes posés par les méthodes exposées précédemment, et en particulier à proposer une solution technique permettant de réaliser de manière économique un corps de bielle creux, ou tout autre objet creux analogue, de grande longueur et dont la paroi peut présenter des variations locales d'épaisseur sans ajout local de matière après réalisation.
Cette solution est apportée par le procédé comportant les caractéristiques de la revendication 1. Des modes de mise en oeuvre préférés sont décrits dans les revendications dépendantes.

Selon l'invention, La longueur et le diamètre de l'ébauche cylindrique ainsi que le diamètre intérieur de la préforme tubulaire sont déterminé de façon à ce que la forme tubulaire obtenue après fluotournage ait une paroi dont l'épaisseur satisfasse les contraintes mécaniques que doit subir le corps de bielle ainsi réalisé, et une longueur suffisante pour réaliser un corps de bielle de la longueur souhaitée.

Selon l'invention, l'étape de réalisation de la préforme tubulaire comporte une opération de rectification par rodage de l'état de surface de la face interne de la préforme tubulaire.

Selon cette forme de réalisation préférée, la face interne est rectifiée de façon à présenter une rugosité Ra de 0,2.

Selon l'invention, l'étape de finition comporte une opération de mise à la longueur voulue de la pièce réalisée.

Selon l'invention, l'ébauche cylindrique est réalisée en acier, ou dans un alliage métallique ayant des caractéristiques répondant aux exigences d'utilisation de la pièce.

Selon un mode de mise en oeuvre préféré, cet alliage est un alliage de nickel de chrome et de fer, dans lequel le nickel est très majoritaire, de l'inconel par exemple.

Selon un autre mode de mise en oeuvre préféré, cet alliage est un acier de type 15-5 Ph.

Selon un autre mode de mise en oeuvre préféré, le matériau est un alliage de titane TA6V.

Selon un autre mode de mise en oeuvre préféré, le corps de bielle réalisé par mise en oeuvre du procédé selon l'invention est utilisé pour réaliser une bielle comportant le corps de bielle et deux embouts assemblés aux extrémités du corps de bielle.

Le procédé selon l'invention permet avantageusement de réaliser à partir d'une même barre de métal ou d'alliage, un corps de bielle creux, ou tout autre objet analogue, de grande longueur et dont la paroi peu présenter des variations locales d'épaisseur permettant de répondre à des contraintes mécanique locales. Avantageusement, la masse du corps de bielle ainsi formé est considérablement allégée.

Le procédé selon l'invention présente également l'avantage d'être économique en terme de matière, la matière non utilisée étant ici extraite d'une seule pièce.
La mise en oeuvre du procédé est par ailleurs avantageusement adaptable au matériau utilisé et aux exigences de tenue aux contraintes mécaniques souhaitées.

### DESCRIPTION DES FIGURES

L'invention et ses avantages seront plus clairement exposés au travers de la description qui suit description accompagnée des figures annexées qui présentent:
- les figures 1 et 2, des représentations schématiques d'une bielle vue en perspective et en coupe longitudinale,
- la figure 3, un schéma de l'ébauche réalisée durant la première étape du procédé,
- la figure 4, une illustration de l'opération de carottage réalisée durant la deuxième étape du procédé,
- la figure 5, une vue schématique partielle en coupe transversale de la préforme obtenue à l'issue de la deuxième étape du procédé,
- les figures 6 et 7, des illustrations des moyens mis en oeuvre pour réaliser l'opération de fluotournage de la troisième étape du procédé,
- la figure 8, une vue schématique en coupe transversale de la structure tubulaire finalement obtenue.

### DESCRIPTION DETAILLEE

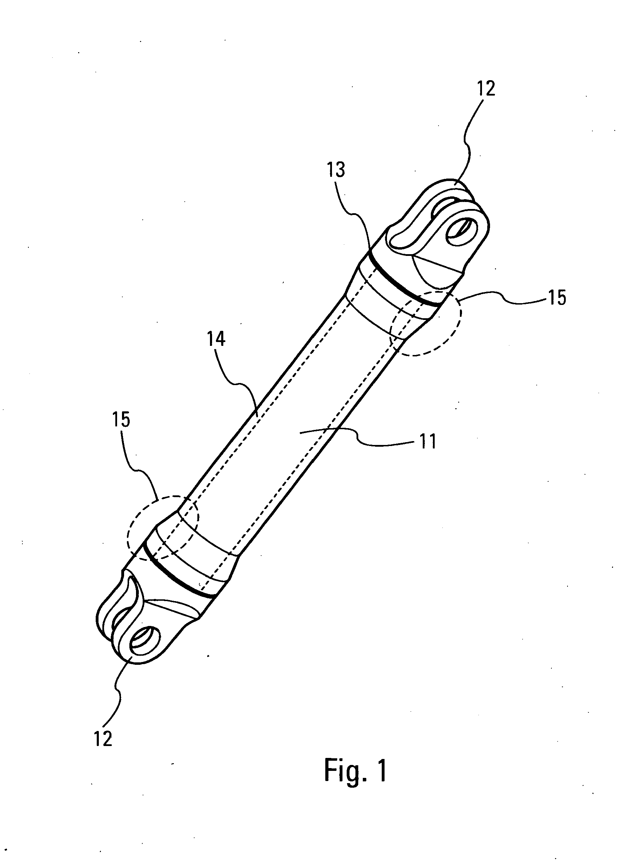

On s'intéresse tout d'abord à la figure 1, qui représente une bielle de manière schématique. Celle-ci est constituée de manière conventionnelle d'un corps de bielle 11 sur lequel sont assemblées les têtes 12. Cet assemblage peut être réalisé par tout moyen connu, généralement par soudage en réalisant une soudure bord à bord de la tête 12 sur le corps 11. Pour alléger l'ensemble de la pièce, le corps 11, dont la longueur est parfois importante, est généralement constitué par un tube dont la paroi 14 présente à chaque extrémité, dans la zone de fixation de la tête une surépaisseur 15.

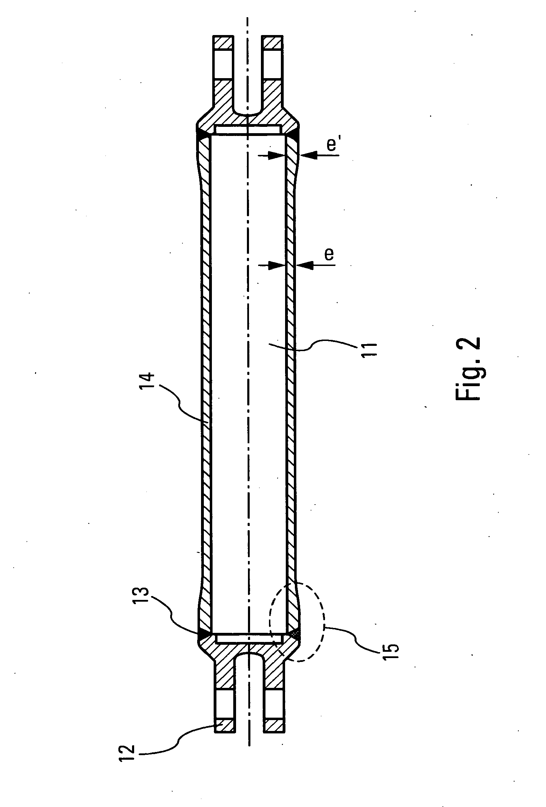

Comme l'illustre la figure 2, cette surépaisseur permet avantageusement de renforcer la résistance mécanique de l'ensemble au niveau de la zone d'assemblage qui constitue une zone dans laquelle les contraintes mécaniques transmises par la tête de bielle au corps de bielle sont irrégulièrement réparties le long de la zone d'assemblage. En effet c'est dans cette zone 15 que les contraintes sensiblement axiales subies par les chapes constituant les têtes de bielle 12, sont re-réparties pour être appliquées de manière uniforme sur la paroi du tube constituant le corps de bielle 11. Cette re-répartition est réalisée au travers des portions terminales surépaissies du tube 11. En outre, la zone d'assemblage 13, réalisée par soudure, présente des caractéristiques de résistance mécaniques plus faibles que le reste de la bielle et constitue de ce fait une zone de fragilité, fragilité compensée par la surépaisseur, e', des bords 15 d'assemblage.

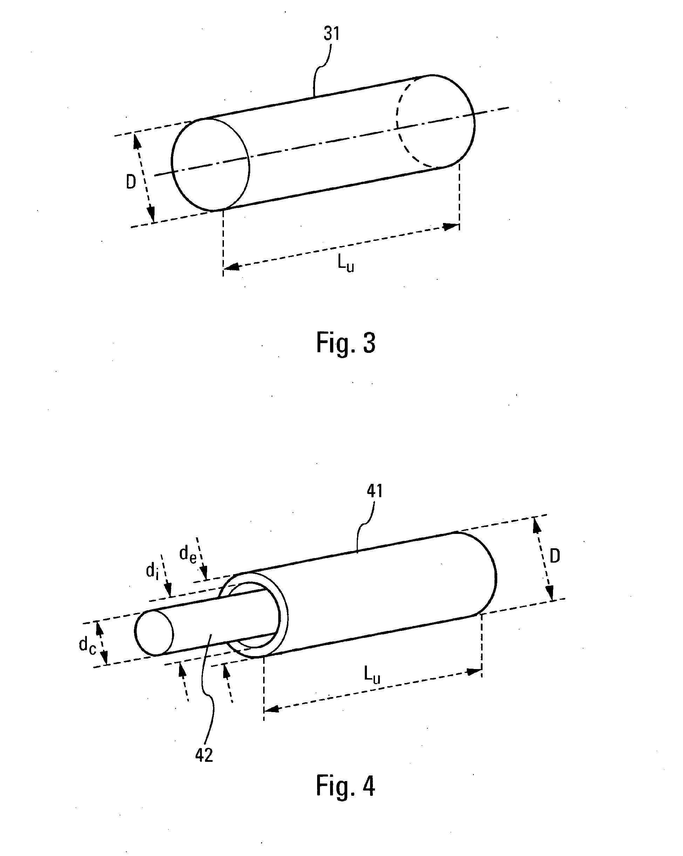

On s'intéresse à présent aux figures 3 à 7 qui illustrent les différentes étapes du procédé selon l'invention, étapes conduisant à la réalisation d'un corps de bielle creux présentant une zone épaissie à chacune de ses extrémités.

La figure 3 illustre la première étape. Celle-ci consiste à réaliser une ébauche cylindrique pleine à partir d'une barre de matériau. Durant cette étape, l'initiation de la fabrication du tube s'effectue par le choix d'un élément plein de forme cylindrique, de préférence de section circulaire d'axe longitudinal figure 2, dont les dimensions et en particulier le diamètre D, conviennent à la réalisation de la préforme. Dans cet élément plein on découpe un élément cylindrique de longueur Lᵤ. Selon l'invention la longueur Lᵤ est définie en fonction des dimensions finales du corps de bielle, comme cela est exposé dans la suite de la description.
Le Matériau utilisé pour réaliser l'ébauche 31 dépend des caractéristiques mécaniques et thermiques que doit posséder le corps de bielle à réaliser. D'une manière générale ce matériau est du métal, de l'acier par exemple, ou bien un alliage métallique choisi pour ses caractéristiques particulières adaptées à l'usage auquel la bielle est destinée.
Ainsi, par exemple, si la bielle à réaliser doit supporter des contraintes mécaniques et une température élevée, on utilisera préférentiellement un alliage de Nickel de Chrome et de Fer comportant majoritairement du Nickel, de type Inconel 718 par exemple, tandis que pour répondre à des contraintes thermiques plus faibles on pourra utiliser un acier de type 15-5 Ph.
Si en revanche les contraintes prépondérantes sont la résistance mécanique et le poids, on pourra utiliser un alliage de Titane, de type TA6V par exemple.

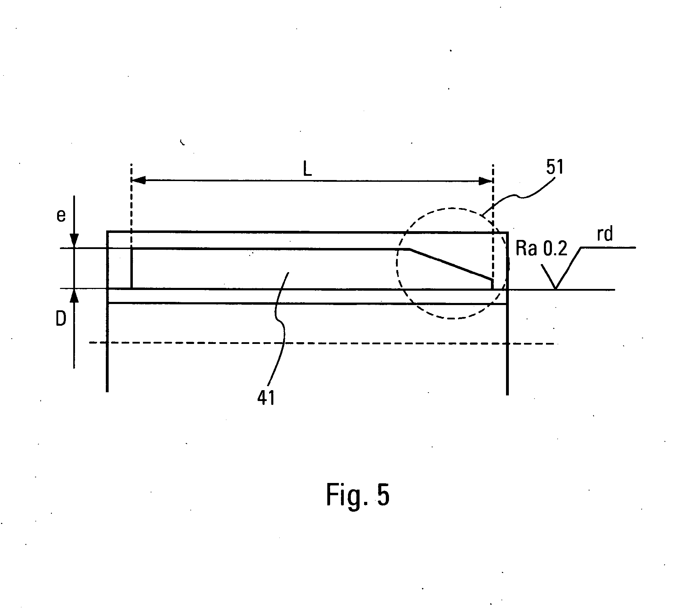

La figure 4 illustre la seconde étape du procédé selon l'invention. Celle-ci consiste à réaliser d'une préforme creuse 41 à partir de l'ébauche cylindrique pleine obtenue à l'issue de la première étape du procédé. Préférentiellement cette préforme est réalisée par carottage, plutôt que par alésage. De la sorte, la matière non utilisée est extraite d'un seul bloc de l'ébauche 31, sous la forme d'un barreau cylindrique 42, ou carotte, de diamètre de.
La préforme ainsi réalisée a une longueur Lᵤ sensiblement égale à celle de l'ébauche 31. Elle forme un tube cylindrique d'épaisseur eᵤ = dₑ-dᵢ où de et dᵢ représentent respectivement les diamètres extérieur et intérieur du tube.
Le diamètre de l'ébauche 31 et le diamètre de la carotte 42 sont déterminés de façon à ce que l'on puisse obtenir par carottage un tube d'épaisseur eᵤ voulue, constituant la préforme 41. En outre l'opération de carottage doit être optimisée de façon à ce que la partie de l'ébauche concernée par le carottage (entre le diamètre di et le diamètre dc) laisse subsister une carotte dont le diamètre permette une réutilisation économiquement intéressante. On fait en sorte par exemple que le carottage soit tel que l'on ait (di-dc)/2 ≤ 10mm.
On obtient ainsi de manière économique à l'issu de cette seconde étape une préforme creuse dont l'épaisseur eᵤ est sensiblement égale, voire très légèrement supérieure à l'épaisseur e' du corps de bielle dans les zones d'extrémité 15.
Selon un mode préféré de mise en oeuvre, le procédé selon l'invention comporte à ce stade, précédent l'étape de fluotournage, une opération de rodage à la pierre de la surface interne de la préforme 41. Cette opération permet avantageusement de garantir l'aspect de surface interne et de l'assortir par rodage, d'une rugosité Ra donnée, de 0.2 par exemple. Cette opération permet de minimiser tous les défauts pouvant initier une rupture intempestive lors des sollicitations mécaniques. La figure 5 présente une vue schématique partielle de la préforme 41 obtenue à l'issue de la deuxième étape du procédé, préforme qui comporte une zone 51 dont le profil est adapté à la mise en oeuvre des étapes suivantes.

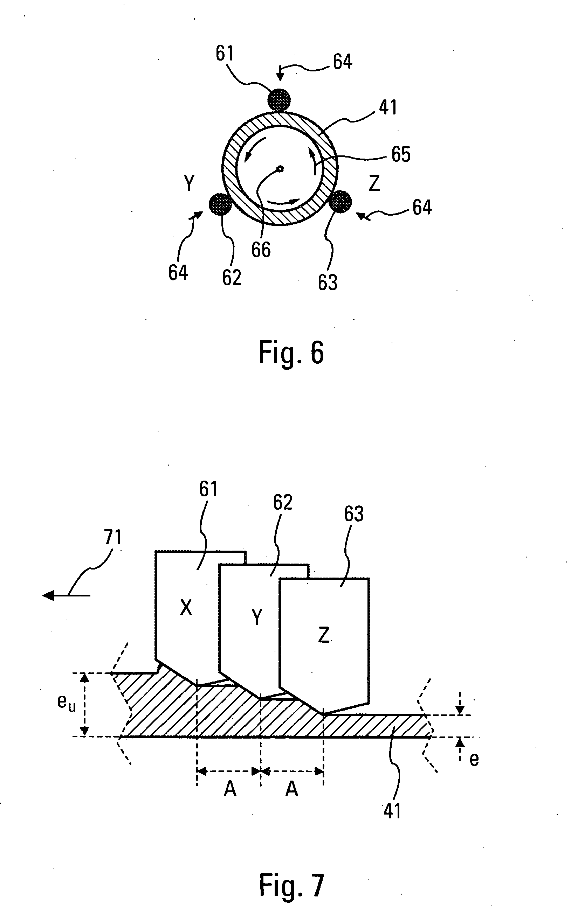

Les figures 6 et 7 illustrent de manière schématique, la troisième étape du procédé selon l'invention. Comme il a été dit précédemment, cette étape consiste à appliquer une opération de fluotournage à la préforme 41 obtenue à l'étape précédente. Cette opération, opération classique de formage de matériau, connue de l'homme du métier, n'est pas décrite ici dans le détail. On rappelle simplement que ce procédé est réalisé à température ambiante et le mandrin qui supporte la pièce ainsi que la pièce elle-même sont refroidis durant toute l'opération.

Dans le cadre du procédé selon l'invention, la préforme 41 est insérée sur un mandrin de fluotournage, de diamètre sensiblement identique à celui de la surface interne cylindrique jusqu'à venir au contact d'entraîneurs qui entraînent la préforme dans un mouvement de rotation, symbolisé par les flèches 65 sur la figure 6. Ensuite à l'aide des trois molettes 61, 62 et 63, mobile le long de la paroi de la préforme, on réalise simultanément trois opérations d'écrouissage qui permettent d'amener l'épaisseur de la paroi de la préforme à une valeur, e, donnée, valeur qui peut varier sur la longueur de la préforme. Pour ce faire, les trois molettes sont positionnées comme l'illustre la figure 6 à 120° dans un plan transversal à l'axe de la préforme 41 et étagées à la fois diamétralement et longitudinalement comme l'illustre la figure 7.
De la sorte, en réglant la vitesse de déplacement des molettes et en faisant varier, au cours du déplacement, la position des molettes par rapport à la surface externe de la préforme, position symbolisée par les flèches 63 sur la figure 6, il est possible de donner à cette paroi une épaisseur variable sur sa longueur. On peut ainsi avantageusement réaliser, à partir d'une seule et même pièce, un corps de bielle creux dont la paroi a une épaisseur constante égale à e, sur toute la longueur du corps de bielle excepté dans les zones d'extrémité 15 où elle a une épaisseur, e', plus importante.

Il est à noter ici que sur la figure 6 les dimensions relatives des pièces représentées sont strictement indicatives, le diamètre des molettes 61, 62 et 63 pouvant être, selon les cas, supérieur ou inférieur au diamètre de la préforme 41 qui subit le fluotournage. La figure 6 a simplement pour objet de montrer le positionnement relatif des molettes autour de la préforme 41.

Le schéma de la figure 7 qui représente artificiellement les trois molettes 61, 62 et 63 dans un même demi-plan, illustre les actions d'écrouissage effectuées successivement sur la paroi 41 par ces molettes et l'obtention d'une paroi d'épaisseur e au fur et à mesure du déplacement des molettes le long de la préforme, déplacement symbolisé par la flèche 71 sur la figure 7.

De manière connue, cette opération de fluotournage s'accompagne d'un déplacement de matière qui se traduit par un allongement de la pièce à laquelle cette opération est appliquée. Ainsi, si l'épaisseur initiale eᵤ de la préforme est réduite de 80%, la longueur de la préforme est multiplié par un facteur pouvant atteindre 4.
Ainsi par exemple, en utilisant une préforme de longueur égale à 700 mm dont la paroi initiale a une valeur appropriée, il est possible de réaliser, par simple réduction de l'épaisseur, un tube d'une pouvant atteindre une longueur de 2800 mm. De la sorte, en mettant en oeuvre une opération de fluotournage sur la préforme, le procédé selon l'invention permet de réaliser à partir d'un préforme de taille relativement faible, et donc facile à réaliser par carottage, un corps de bielle de grande longueur et ayant une paroi dont les zones d'extrémité ont une épaisseur supérieure à l'épaisseur de la partie centrale.

Avantageusement, le procédé de fluotournage, comme tout procédé d'écrouissage, apporte un gain de résistance mécanique à rupture pouvant aller jusqu'à 50%. Cette caractéristique permet avantageusement d'améliorer les performances mécaniques du tube ainsi réalisé, un corps de bielle en particulier. Cette amélioration peut aller jusqu'environ 15 à 20%.

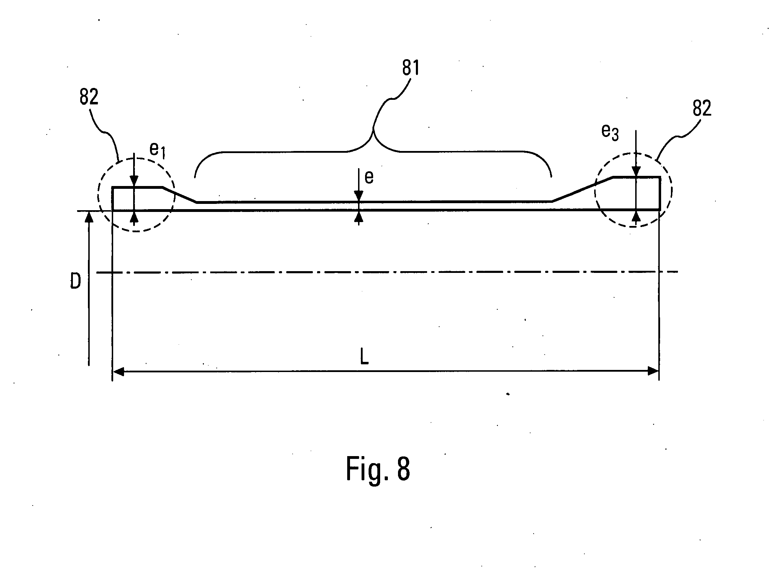

La quatrième étape du procédé selon l'invention est une étape de finition. Durant cette étape on procède principalement à l'ajustement de la longueur du corps de bielle réalisé. De manière générale, l'opération de fluotournage étant une opération relativement douce et continue, l'état de surface de la surface externe du tube ainsi réalisé est satisfaisant. Néanmoins si cela est nécessaire il est possible de lui appliquer un traitement de surface approprié. En outre, si les contraintes d'écrouissage induites par le fluotournage s'avèrent être nuisibles au comportement mécanique du tube réalisé, un traitement d'adoucissement peut être appliqué à ce tube lors de l'étape de finition. On obtient finalement un tube dont la paroi présente avantageusement le profil d'épaisseur souhaité. La figure 8 présente un schéma représentant le profil de la paroi d'un corps de bielle obtenu par le procédé selon l'invention, corps de bielle de longueur L dont la paroi présente une large zone centrale 81 d'épaisseur e, et deux zones 82 situées aux extrémités, d'épaisseur e₁>e.

Ainsi, le procédé selon l'invention permet avantageusement d'obtenir, à moindre coût, des corps de bielle de formes complexes pouvant alors facilement être totalement optimisés vis à vis des différents critères de sollicitations mécaniques telles que la traction, la compression, le flambage, l'excitation dynamique, etc...., optimisation qui passe par une modulation de l'épaisseur de la paroi en fonction de la zone considérée. Il permet d'autre part, par l'association d'opération de carottage et de fluotournage, une amélioration sensible, par rapport aux procédés connus, en ce qui concerne le respect de la géométrie souhaitée, la résistance de la matière, la qualité de la pièce produite, ainsi que le coût de production de cette pièce.

## Revendications

1. Procédé pour réaliser un corps de bielle creux, présentant à ses extrémités des zones de fixation de têtes de bielle dans lesquelles la paroi présente un surépaisseur par rapport à l'épaisseur générale du corps, le corps de bielle étant réalisé à partir d'une ébauche cylindrique (31) elle-même réalisée à partir d'une barre de matériau pleine, **caractérisé en ce qu'**il comporte les étapes suivantes:
- une étape de réalisation, par carottage, d'une préforme tubulaire (41) avec un diamètre intérieur définis,
- une étape de réalisation du corps de bielle proprement dit (11), par fluotournage de la préforme tubulaire (41),
- une étape de finition.

2. Procédé selon la revendication 1, dans lequel la longueur et le diamètre de l'ébauche cylindrique (31) ainsi que le diamètre intérieur dᵢ de la préforme tubulaire (41) sont déterminés de façon à ce que la forme tubulaire (11) obtenue après fluotournage ait une paroi (14) dont l'épaisseur satisfasse toutes les contraintes mécaniques subies et une longueur suffisante pour réaliser un corps de bielle de la longueur souhaitée.

3. Procédé selon l'une des revendications 1 ou 2, dans lequel l'étape de réalisation de la préforme tubulaire (41) comporte une opération de rectification par rodage de l'état de surface de la face interne de la préforme tubulaire.

4. Procédé selon la revendication 3, dans lequel la face interne est rectifiée de façon à présenter une rugosité Ra de 0,2.

5. Procédé selon l'une quelconque des revendications précédentes,
dans lequel l'étape de finition comporte une opération d'ajustement de la longueur de l'objet obtenu après fluotournage.

6. Procédé selon la revendication 5, dans lequel l'étape de finition comporte une opération d'adoucissement du matériau constituant le corps de bielle pour éliminer les contraintes mécaniques internes consécutives à l'opération de fluotournage.

7. Procédé selon l'une quelconque des revendications précédentes,
dans lequel la barre de matériau utilisée pour réaliser l'ébauche (31) est en acier, ou en alliage métallique, selon les exigences d'utilisation de la pièce.

8. Procédé selon la revendication 7, dans lequel la barre de matériau utilisée est en alliage de nickel de chrome et de fer, l'alliage comportant majoritairement du nickel.

9. Procédé selon la revendication 8, dans lequel la barre de matériau utilisée est en inconel.

10. Procédé selon la revendication 7, dans lequel la barre de matériau utilisée est en acier 15-5Ph.

11. Procédé selon la revendication 7, dans lequel la barre de matériau utilisée est en alliage de titane TA6V.

12. Procédé pour réaliser une bielle comportant un corps de bielle creux (11) et deux têtes de bielle (12) montés sur les extrémités du corps de bielle, le corps de bielle creux présentant à ses extrémités des zones de fixation des têtes de bielle dans lesquelles la paroi présente une surépaisseur par rapport à l'épaisseur générale du corps, **caractérisé en ce qu'**il consiste:
- à réaliser un corps de bielle creux (11) en une seule pièce par mise en oeuvre du procédé selon l'une des revendications précédentes;
- à assembler les deux têtes de bielle (12) sur les extrémités du corps de bielle.

## Claims

1. Method for producing a hollow link-rod body, having at its ends zones for attaching link-rod heads in which the wall has a greater thickness than the general thickness of the body, the link-rod body being made from a cylindrical blank (31) itself made from a bar of solid material, **characterized in that** it comprises the following steps:
- a step of producing, by core drilling, a tubular preform (41) with a defined internal diameter,
- a step of producing the link-rod body (11) itself, by flow turning the tubular preform (41),
- a finishing step.

2. Method according to Claim 1, in which the length and the diameter of the cylindrical blank (31) and the internal diameter dᵢ of the tubular preform (41) are determined so that the tubular form (11) obtained after flow turning has a wall (14) the thickness of which satisfies all the mechanical stresses sustained and a length sufficient to produce a link-rod body of the desired length.

3. Method according to one of Claims 1 or 2, in which the step for producing the tubular preform (41) comprises grinding by lapping the surface state of the internal face of the tubular preform.

4. Method according to Claim 3, in which the internal face is ground so as to have a roughness Ra of 0.2.

5. Method according to any one of the preceding claims, in which the finishing step comprises an operation of adjusting the length of the object obtained after flow turning.

6. Method according to Claim 5, in which the finishing step comprises an operation of softening the material for forming the link-rod body in order to remove the internal mechanical stresses following the flow-turning operation.

7. Method according to any one of the preceding claims, in which the bar of material used for producing the blank (31) is made of steel, or of a metal alloy, depending on the usage requirements of the part.

8. Method according to Claim 7, in which the bar of material used is made of a chromium-nickel-iron alloy, the alloy comprising mainly nickel.

9. Method according to Claim 8, in which the bar of material used is made of Inconel.

10. Method according to Claim 7, in which the bar of material used is made of 15-5Ph steel.

11. Method according to Claim 7, in which the bar of material used is a TA6V titanium alloy.

12. Method for producing a link rod comprising a hollow link-rod body (11) and two link-rod heads (12) mounted on the ends of the link-rod body, the hollow link-rod body having at its ends zones for attaching link-rod heads in which the wall has a greater thickness than the general thickness of the body, **characterized in that** it consists:
- in producing a hollow link-rod body (11) in a single piece by applying the method according to one of the preceding claims;
- in assembling the two link-rod heads (12) onto the ends of the link-rod body.

## Patentansprüche

1. Verfahren zum Herstellen eines Pleuelhohlkörpers, der an seinen Enden Befestigungszonen für Pleuelköpfe aufweist, an welchen die Wand eine Überdicke in Bezug auf die allgemeine Stärke des Körpers aufweist, wobei der Pleuelkörper ausgehend von einem zylindrischen Rohling (31) hergestellt ist, der selbst aus einer Massivwerkstoffstange hergestellt ist, **dadurch gekennzeichnet, dass** es die folgenden Schritte aufweist:
- einen Herstellungsschritt einer röhrenförmigen Vorform (41) mit einem definierten Innendurchmesser durch Kernbohren,
- einen Herstellungsschritt des eigentlichen Pleuelkörpers (11) durch Abstreckdrücken der röhrenförmigen Vorform (41),
- einen Endfertigungsschritt.

2. Verfahren nach Anspruch 1, bei dem die Länge und der Durchmesser des zylindrischen Rohlings (31) sowie der Innendurchmesser dᵢ der röhrenförmigen Vorform (41) derart bestimmt sind, dass die röhrenförmige Form (11), die nach dem Abstreckdrücken erzielt wird, eine Wand (14), deren Stärke alle einwirkenden mechanischen Belastungen erfüllt und eine ausreichende Länge hat, um einen Pleuelkörper mit der gewünschten Länge herzustellen.

3. Verfahren nach einem der Ansprüche 1 oder 2, bei dem der Herstellungsschritt der röhrenförmigen Vorform (41) einen Schleifvorgang durch Läppen des Oberflächenzustands der Innenseite der röhrenförmigen Vorform aufweist.

4. Verfahren nach Anspruch 3, bei dem die Innenseite derart geschliffen wird, dass sie eine Rauheit Ra von 0,2 aufweist.

5. Verfahren nach einem der vorhergehenden Ansprüche, bei dem der Endfertigungsschritt einen Justiervorgang der Länge des Objekts, das nach dem Abstreckdrücken erzielt wird, aufweist.

6. Verfahren nach Anspruch 5, bei dem der Endfertigungsschritt einen Weichglühschritt des Werkstoffs, der den Pleuelkörper bildet, aufweist, um die inneren mechanischen Spannungen, die beim Abstreckdrückvorgang entstehen, zu eliminieren.

7. Verfahren nach einem der vorhergehenden Ansprüche, bei dem die Werkstoffstange, die zum Herstellen des Rohlings (31) verwendet wird, je nach den Einsatzauflagen des Werkstücks aus Stahl oder aus einer Metalllegierung besteht.

8. Verfahren nach Anspruch 7, bei dem die verwendete Werkstoffstange aus einer Legierung aus Nickel, Chrom und Eisen besteht, wobei die Legierung in der Hauptsache Nickel enthält.

9. Verfahren nach Anspruch 8, bei dem die verwendete Werkstoffstange aus Inconel besteht.

10. Verfahren nach Anspruch 7, bei dem die verwendete Werkstoffstange aus Stahl 15-5Ph besteht.

11. Verfahren nach Anspruch 7, bei dem die verwendete Werkstoffstange aus Titanlegierung TA6V besteht.

12. Verfahren zum Herstellen eines Pleuels, das einen Pleuelhohlkörper (11) und zwei Pleuelköpfe (12), die auf die Enden des Pleuelkörpers montiert sind, aufweist, wobei der Pleuelhohlkörper an seinen Enden Befestigungszonen der Pleuelköpfe aufweist, in welchen die Wand eine Überdicke in Bezug auf die allgemeine Stärke des Körpers aufweist, **dadurch gekennzeichnet, dass** es aus Folgendem besteht:
- Herstellen eines Pleuelhohlkörpers (11) aus einem einzigen Stück durch Umsetzen des Verfahrens nach einem der vorhergehenden Ansprüche;
- Anbauen der zwei Pleuelköpfe (12) auf den Enden des Pleuelkörpers.
